Europäisches Patentamt

European Patent Office

Office européen des brevets

(11) Veröffentlichungsnummer: **0 411 468 A1**

(12) **EUROPÄISCHE PATENTANMELDUNG**

(21) Anmeldenummer: 90114292.7

(51) Int. Cl.⁵: **H02B 1/056**

(22) Anmeldetag: 25.07.90

(30) Priorität: 01.08.89 DE 8909299 U
14.04.90 DE 9004323 U

(43) Veröffentlichungstag der Anmeldung:
06.02.91 Patentblatt 91/06

(84) Benannte Vertragsstaaten:
AT DE ES FR GB IT NL SE

(71) Anmelder: Grote & Hartmann GmbH & Co. KG
KG KG
Am Kraftwerk 13
D-5600 Wuppertal 21(DE)

Anmelder: Licentia Patent-Verwaltungs-GmbH
Theodor-Stern-Kai 1
D-6000 Frankfurt/Main 70(DE)

(72) Erfinder: Ritter, Heinz
Johannisstrasse 9-11
D-8500 Nürnberg(DE)
Erfinder: Frischmann, Albert
Albrecht-Thaer-Strasse 14
D-8500 Nürnberg(DE)
Erfinder: Schulze, Otto
Rennbaumer Strasse 21
D-5600 Wuppertal 12(DE)
Erfinder: Brandstäter, Manfred
In der Krim 40a
D-5600 Wuppertal 21(DE)
Erfinder: Reinertz, Rudolf
Rolingswerth 14
D-5600 Wuppertal 2(DE)
Erfinder: Wermke, Michael
Kniggeweg 10
D-1000 Berlin 28(DE)
Erfinder: Kerscher, Gerhard
Auricher Strasse 11
D-8500 Nürnberg 90(DE)

(74) Vertreter: Patentanwälte Dr. Solf & Zapfapf
Schlossbleiche 20 Postfach 13 01 13
D-5600 Wuppertal 1(DE)

(54) **Elektrische Verteilervorrichtung.**

(57) Elektrische Verteilervorrichtung zum Einbau in insbesondere elektrische Haushaltsgeräte, wie Geschirrspüler, Waschmaschinen, Trockner und dgl., mit einem Kunststoffsockel als Träger für mit Steckfahnen ausgerüstete Kontaktelemente und einem Gruppenstekköffnungen bildenden Führungsgitter zum Aufnehmen von auf die Steckfahnen steckbare Gruppenstecker, wobei eine Mehrzahl, insbesondere flache Steckfahnen (4) in Abständen voneinander an einer Längsseite eines Verbinderstreifens angeordnet sind, der Kunststoffsockel (2) in mehreren, sich parallel zueinander erstreckenden Reihen (A1 bis Q1) Halteelemente für die Verbinderstreifen aufweist, und das Führungsgitter als ein lösbar mit dem Kunststoffsockel (2) verbindbarer Führungsrahmen (3) ausgebildet ist.

FIG.1

EP 0 411 468 A1

## ELEKTRISCHE VERTEILERVORRICHTUNG

Die Erfindung bezieht sich auf eine elektrische Verteilervorrichtung nach dem Oberbegriff des Anspruchs 1.

Es ist bei Arbeitsmaschinen und elektromechanischen Geräten, insbesondere Haushaltsgeräten wie Wasch- und Geschirrspülmaschinen, Wäschetrockner, elektrischen Herden und dgl. oder elektromechanischen bzw. elektronischen Geräten des Kraftfahrzeugsbaus bekannt, zur Verteilung der erforderlichen elektrischen Leitungen eine Verteilervorrichtung mit einer Vielzahl von Steckverbinder vorzusehen, an die die zur Versorgung des Gerätes erforderliche Anzahl elektrischer Leitungen mittels einzelner Stecker ansteckbar sind. Das Anstecken ist nicht nur zeitaufwendig und schwierig, weil die einzelnen Stecker nacheinander aufgesteckt werden müssen, sondern es ist auch darauf zu achten, daß jeweils der richtige Stecker an den zugehörigen Steckverbinder angesteckt wird. Andernfalls werden nicht zueinander gehörige elektrische Leitungen miteinander verbunden, was zu Funktionsausfällen und auch zu Kurzschlüssen führen kann.

Aus der DE-PS 33 40 742 ist eine elektrische Verteilervorrichtung für die mit dem Programmsteuergerät einer Haushaltmaschine zusammenarbeitenden elektrischen Komponenten, wie Motorregler, Programmschalter usw. bekannt. Diese Verteilervorrichtung weist einen Kunststoffsockel für die auf seiner einen Flachseite angeordneten Gruppensteckerstifte und die auf seiner anderen Flachseite befindlichen Verbindungsanschlüsse auf. Die Flachseite mit den Gruppensteckerstiften ist als eine Art Führungsgitter zum entsprechenden Einführen von auf den Gruppensteckerstiften aufbringbaren Gruppensteckern ausgebildet.

Der Erfindung liegt die Aufgabe zugrunde, ohne großen Aufwand eine elektrische Verteilervorrichtung der eingangs angegebenen Art so auszugestalten, daß ein und derselbe Kunststoffsockel für die unterschiedlichsten Bestückungen geeignet und das Herstellen von fehlerhaften Anschlüssen praktisch ausgeschlossen ist.

Diese Aufgabe wird durch die Merkmale des Anspruchs 1 gelöst.

Durch die Erfindung wird eine elektrische Verteilervorrichtung geschaffen, die mit geringem Aufwand für eine Vielzahl von Verteilervorrichtungs-Varianten rationell und damit kostengünstig bestückt werden kann. Eine solche Verteilervorrichtung ersetzt mit Vorteil die bisher bei Haushaltsgeräten der in Rede stehenden Art verwendeten sogenannten Kabelbäume.

Den Steueröffnungen sind Gruppenstecker zugeordnet, in denen zueinander gehörige Steckerverbinder zu einer Steckergruppe zusammengefaßt sind, so daß für jede Steckgruppe nur ein Steckvorgang erforderlich ist, der handhabungsfreundlich und schnell an der richtigen Stelle ausgeführt werden kann.

Vorteilhafte Weiterbildungen der Erfindung, die zu einer konstruktiv einfachen sowie kleinen und handhabungsfreundlichen Bauweise sowie auch zu einer kostengünstigen Herstellung beitragen und unter anderem auch eine Verwechslung der Steueröffnungen und Gruppenstecker untereinander durch formschlüssige Codierung ausschließen, sind in den Unteransprüchen gekennzeichnet.

Nachfolgend wird die Erfindung anhand von in der Zeichnung dargestellten bevorzugten Ausführungsbeispielen näher erläutert.

Es zeigen:

Fig. 1 eine erfindungsgemäß ausgstaltete Verteilervorrichtung mit einem Führungsrahmen in auseinandergezogener Position in perspektivischer Darstellung;

Fig. 2 eine erfindungsgemäße Verteilervorrichtung in anderer Ausgestaltung in der Seitenansicht, teilweise geschnitten;

Fig. 3 die Verteilervorrichtung nach Fig. 2 in der Draufsicht;

Fig. 4 die Verteilervorrichtung nach Fig. 2 in der Unteransicht;

Fig. 5 das Gehäuse der Verteilervorrichtung nach Fig. 2 in der Draufsicht;

Fig. 6 den Teil-Schnitt VI-VI in Fig. 5;

Fig. 7 den Schnitt VII-VII in Fig. 5;

Fig. 8 einen Steckverbinderstreifen des Verteilerblocks nach Fig. 2 in der Seitenansicht;

Fig. 9 der Führungsrahmen der Verteilervorrichtung nach Fig. 2 in der Draufsicht;

Fig. 10 der Führungsrahmen in der Unteransicht;

Fig. 11 den Schnitt XI-XI in Fig. 10.

Die Verteilervorrichtung 1 weist einen Kunststoffsockel z.B. in Form eines quaderförmigen Gehäuses 2 mit einer oberen und einer unteren Flachseite, einen dem Gehäuse 2 vorgeordneten Führungsrahmen 3 und eine Vielzahl Steckverbinder in Form von Flachsteckzungen 4 auf, die am Gehäuse 2 angeordnet sowie gehalten sind und sich in Kreuzungspunkten von rechtwinklig zueinander angeordneten Steckzeilen, z.B. A bis E und Reihen A1 bis Q1 an der oberen Flachseite des Gehäuses 2 befinden, wobei die Steckzungen 4 sich vertikal und mit ihren Breitseiten parallel zu den Ebenen der Reihen A1 bis Q1 erstrecken.

Beim Führungsrahmen 3 handelt es sich um ein Vorsatzteil, das von oben auf das Gehäuse 2 aufsetzbar und in einer gegenüber dem Gehäuse 2 zentrierten Position am Gehäuse 2 befestigbar, vorzugsweise verrastbar oder anklipsbar ist. Bei der vorliegenden Ausgestaltung sind hierzu an der Unterseite des Führungsrahmens 3 vier im Bereich der Ecken angeordnete Verrastungsarme 5 mit Verrastungsnasen 6 und Anlaufschrägen 7 vorgesehen, die beim Aufsetzen des Führungsrahmens 3 von einander gegenüberliegenden Seitenflächen 8 des Gehäuses 2 ausgebogen werden und in in diesen Seitenflächen 8 horizontal verlaufende Verrastungsnuten 9 einrasten und wahlweise aus der Verrastungsstellung herausbiegbar sind, um den Führungsrahmen 3 zu entfernen. Zur horizontalen Positionierung des Führungsrahmens 3 am Gehäuse 2 sind Zentrierstifte 11 und diese aufnehmende Zentrierlöcher 12 vorgesehen. Bei der vorliegenden Ausgestaltung sind die Zentrierstifte 11 am Führungsrahmen 3 angeordnet, und sie erstecken sich von dessen Unterseite abwärts. In der Montagestellung fassen die Zentrierstifte 11 in die sich in der Deckenwand 13 des Gehäuses 2 vertikal erstreckenden Zentrierlöcher 12 ein.

Der Führungsrahmen 3 ist von im horizontalen Querschnitt viereckiger Form, und er besteht aus vier vertikalen Umfangswänden 13 bis 16, und vier inneren vertikalen Stegwänden 17, die fünf Gruppenstecköffnungen 23 begrenzen, die sich in den Vertikalebenen der Steckzeilen A bis E erstrecken, in der Montagestellung unterseitig von der Deckenwand 28 des Gehäuses 2 begrenzt sind und oberseitig offen sind. Die Stegwände 17 erstrecken sich somit zwischen den Steckzeilen A bis E bzw. zwischen den Steckzeilen der Steckzungen 4.

Die sich parallel zu den Steckzeilen A bis E erstreckenden Stecköffnungs-Wandflächen 29 weisen zwei verschiedene Formgebungen auf. Zum einen weisen sie in regelmäßigen Abständen voneinander angeordnete gleich große, sich parallel zu den Mittelachsen der Stecköffnungen 23, hier vertikale Positionierrippen 31 oder Positioniernuten auf, die sich hier über die gesamte Höhe h der Stegwände 17 erstrecken. Die positionierrippen sind jeweils von gleich großem rechteckigem oder quadratischem Querschnitt, so daß sich eine regelmäßige Rippung der Wandflächen 29 ergibt. Zum anderen weisen die Wandflächen 29 Codierausnehmungen oder -stege, vorzugsweise in Form von Codiernuten 33 auf, die sich mit den Positioniernuten 32 vergleichbar ebenfalls vertikal erstrecken sowie auch von rechteckigem oder quadratischem Querschnitt sind, die jedoch unregelmäßig bzw. in unregelmäßigen Abständen voneinander bzw. von den Reihen A1 bis Q1 angeordnet sind.

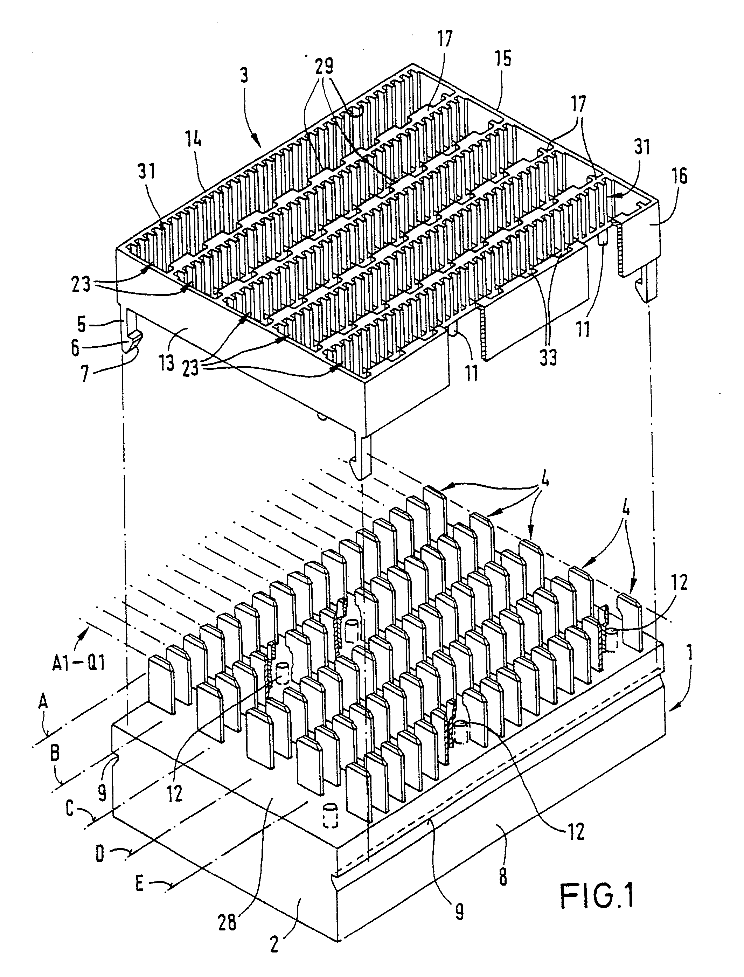

Die in einer jeweiligen Reihe A1 bis Q1 angeordneten Steckzungen 4 können einzeln angeordnet sein oder es können einander längs der Reihe benachbarte Steckzungen 4 zu Zweier-, Dreier- oder Vierer-Gruppen miteinander verbunden sein. Die einzelnen Steckzungen 4 sowie die Gruppe oder Gruppen von Steckzungen 4 einer jeweiligen Reihe A1 bis Q1 ist bzw. sind mit einer Einzel-Steckzunge 4 oder einer oder mehreren Gruppen von Steckzungen 4 wenigstens einer anderen Reihe in in Fig. 1 nicht dargestellter Weise durch Kontaktbrücken so miteinander verbunden, daß sich für jede Stecköffnung 23 besondere Steckgruppen mit besonderen Schaltkreisen ergeben, die für bestimmte Schaltfunktionen gedacht sind und durch Einstecken von zugehörigen, nicht dargestellten Steckern mit korrespondierenden Steckverbindern, hier Flachsteckhülsen, in die Stecköffnungen 23 mit bestimmten Aggregaten der vorhandenen Maschine bzw. des vorhandenen Gerätes verbunden werden und somit schaltungstechnisch zur Auswirkung kommen können. Bei einer Waschmaschine sind solche Aggregate z.B. der Waschtrommelantrieb, der Pumpenantrieb, die Ventilsteuerung und dgl. mehr.

Die nicht dargestellten Stecker sind zum einen an die durch die Positionierrippen 31 vorgegebene Profilierung und zum anderen an die durch die Codiernuten 33 vorgegebene Profilierung der Stecköffnungen 23 derart angepaßt, daß nur ein zugehöriger Stecker in die jeweilige Stecköffnung 23 einsteckbar ist. Deshalb kommen nur bestimmte Steckzungen 4 mit zugehörigen Flachsteckhülsen der Stecker in Kontakt, wodurch Fehlsteckungen vermieden sind.

Die Stecköffnungen 23 bilden mit den zugehörigen, sich längs der jeweiligen Steckzeilen A bis E angeordneten Steckzungen 4 oder Steckgruppen ein Steckgesicht, das das Stecken der Stecker wesentlich erleichtert. Durch die Codierung sind außerdem Fehlsteckungen ausgeschlossen.

Bei der Ausgestaltung nach Fig. 1 sind die Positionierrippen 31 an der einen und die Codiernuten 33 an der anderen Wandfläche 29 jeder Stecköffnung 23 angeordnet, vorzugsweise an den in die gleiche Richtung weisenden Wandflächen 29.

Die Verteilervorrichtung 1 kann in geeigneter Weise an der vorhandenen Maschine bzw. am vorhandenen Gerät gehalten werden, z.B. durch Aufsetzen auf eine Auf- oder Anlagefläche und Halterung durch nicht dargestellte Halterungsmittel.

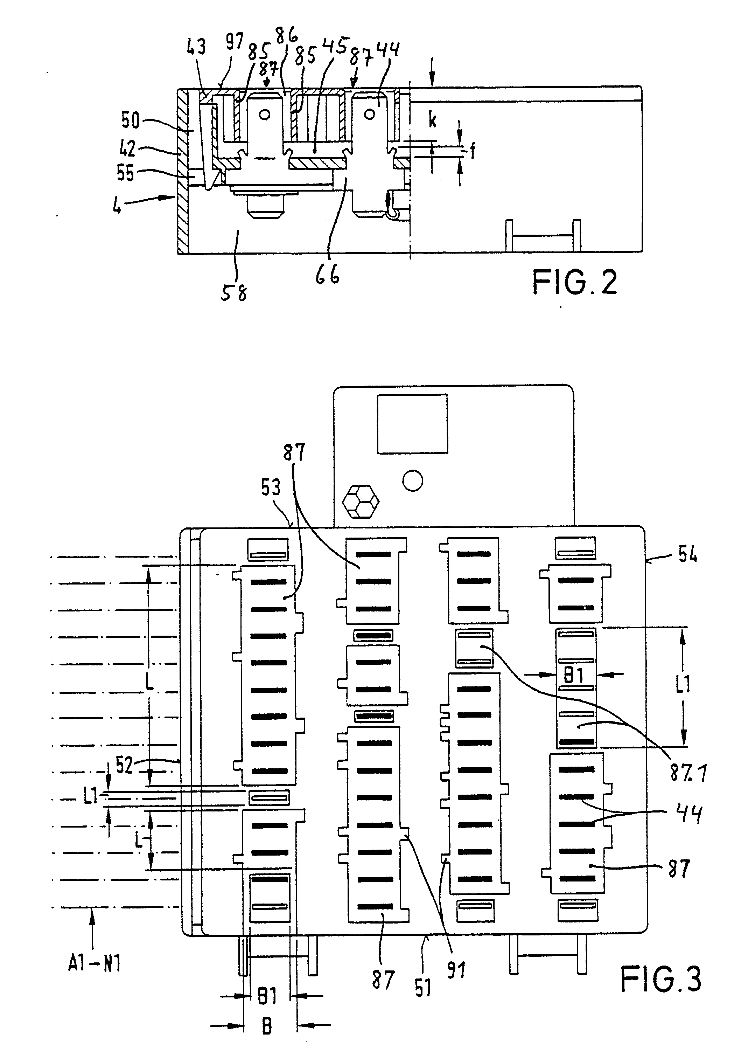

Bei der Ausgestaltung gemäß Fig. 2 bis 9 ist der hier mit 43 bezeichnete Führungsrahmen in das Gehäuse 42 der Verteilervorrichtung 41 versenkt. Hierzu weist das Gehäuse 42 an seiner Ober-bzw. Frontseite eine Ausnehmung 50 auf, in die hinein der Führungsrahmen 43 einsetzbar ist. Das Gehäuse 42 von viereckigem oder quadratischem Querschnitt besteht im wesentlichen aus vier Umfangswänden 51 bis 54 und einer sich in einer horizontalen mittleren Ebene erstreckenden Mittelwand 55, die die Ausnehmung unterseitig begrenzt. Beim vorliegenden Ausführungsbeispiel können zur umfangsseitigen Begrenzung der Aus-

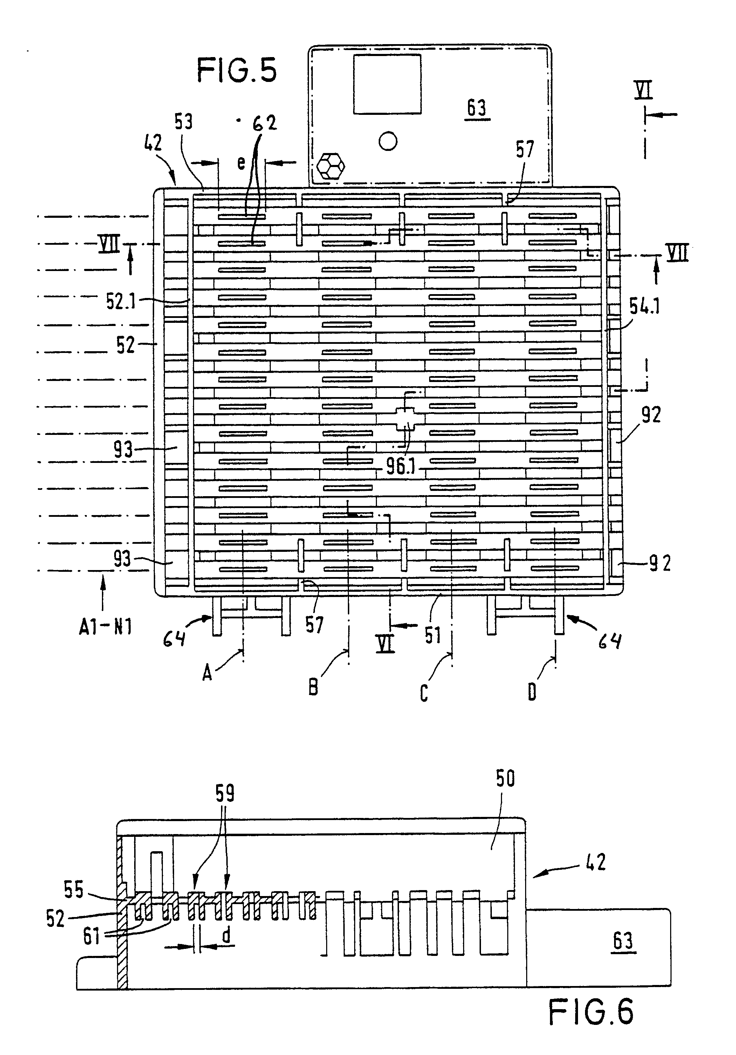

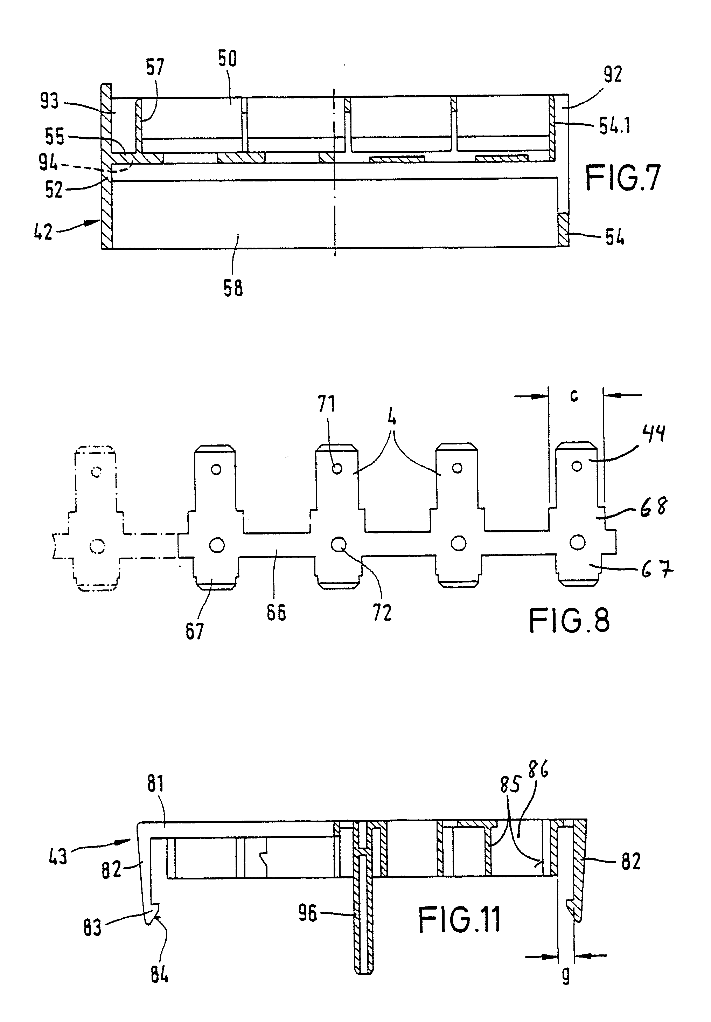

nehmung 50 Hilfs Umfangswände vorgesehen sein, wie sie bei der vorliegenden Ausgestaltung (Fig. 5 und 7) in einem Abstand von der linken und rechten Umfangswand 52, 54 angeordnet und mit 52.1, 54.1 bezeichnet sind. Zur Aussteifung der in ihrer Dicke teilweise verjüngten Umfangswände 51 und 53 können vertikale Verstärkungsstege 57 vorgesehen sein, die hier sich an den Innenseiten der betreffenden Umfangswände 51, 53 befinden, und zwar zwischen den bei dieser Ausgestaltung vier Steckzeilen A bis D. Die Reihen sind bei dieser Ausgestaltung mit A1 bis N1 bezeichnet. Unterhalb der Mittelwand 55 befindet sich ein Brückenaufnahmeraum 58. Die Mittelwand 55 ist durch Haltestege 59 von quadratischem oder viereckigem Querschnitt verstärkt, die sich in den Vertikalebenen der Reihen A1 bis N1 erstrecken und ober- und/oder unterseitig von der Mittelwand 55 im wesentlichen über die gesamte Abmessung des Brückenaufnahmeraumes 58 erstrecken. In den Haltestegen 59 sind unterseitig sich in den Reihen A1 bis N1 erstreckende Aufnahmenuten 61 bzw. Schlitze vorgesehen, die sich über die gesamte Länge der Haltestege 59 von deren Unterseite bis etwa zur Höhe der Mittelwand 55 erstrecken. Mittig zu den Steckreihen A bis D sind in den Haltestegen 59 sich vertikal und ebenfalls in den Ebenen der Reihen A1 bis N1 erstreckende vertikale Durchgangsschlitze 62 in jedem Kreuzungspunkt zwischen den Reihen A1 bis N1 und den Steckzeilen A bis D vorgesehen, deren Dicke der Dicke d der Aufnahmenuten 61 entspricht.

Im Gehäuse 42 ist auf einer Seite seitlich ein kastenförmiger Ansatz 63 mit einem vertikalen Durchgangsloch 65 zur Aufnahme einer nicht dargestellten Befestigungsschraube angeordnet, mit der die Verteilervorrichtung 41 auf ihrer sie tragenden Unterlage befestigbar ist. Auf der dem Ansatz 63 gegenüberliegenden Seite können Halterungsansätze 64 angeordnet sein, die der zusätzlichen Halterung dienen.

Die beim vorliegenden Ausführungsbeispiel ebenfalls durch Steckzungen 44 gebildeten Steckverbinder der Verteilervorrichtung 41 gehen einstückig von Verbinderstreifen 66 (Fig. 8) aus, die sich in den Ebenen der Steckzeilen A1 bis N1 erstrecken. Von den Verbinderstreifen 66 erstrecken sich die Steckzungen 44 rechtwinklig nach oben. Den Steckzungen 4 gegenüberliegend sind an den Verbinderstreifen 66 in ihrer Breite stufenförmig verjüngte Brückenansätze 67 in den Steckzungen 44 vergleichbarer Form angeordnet. Am Fuß der Steckzungen 44 befinden sich zu beiden Seiten der Steckzungen 44 stufenförmige Fußansätze 68, deren Breite mit c bezeichnet und an die Länge e der Durchgangsschlitze 62 angepaßt ist. Mittig in den Steckzungen 44 und ebenfalls mittig und in den Kreuzungspunkten mit letzterem befinden sich in den Verbinderstreifen 66 runde Querlöcher 71, 72. Die Verbinderstreifen 66 sind mit den Steckzungen 44, Brücken- sowie Fußansätzen 67, 68 und den Querlöchern 71, 72 einteilig aus einem Blech-Stanzstreifen ausgestanzt.

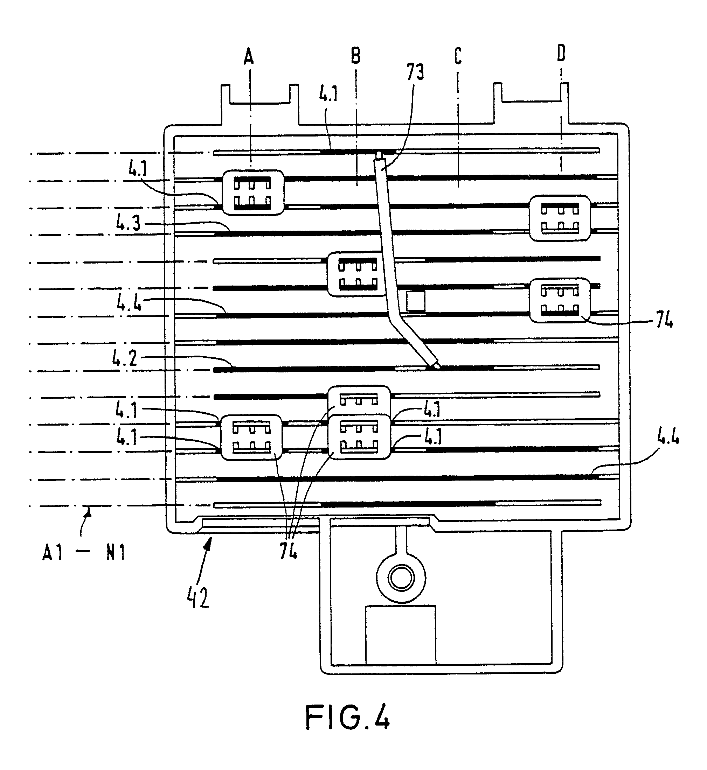

Die Verbinderstreifen 66 werden von unten in die Aufnahmenuten 61 in solcher Position eingesetzt, in der die Steckzungen 44 mit den Fußansätzen 68 die Durchgangsschlitze 62 durchfassen, wie es aus Fig. 2 zu entnehmen ist. In der eingesetzten Position überragen die Fußansätze 68 die Mittelwand 55 um das Maß f (Fig. 2); und die freien Ecken der Fußansätze 68 sind durch Kerbschläge in eine die Mittelwand 55 hintergreifende Stellung gespreizt, wodurch die Verbinderstreifen 66 im Gehäuse 42 gesichert sind. Wie aus Fig. 4 deutlich zu entnehmen ist, sind diverse Brückenansätze 67 von einem einzigen oder mehrere in der jeweiligen Reihe A1 bis N1 einander benachbarte Steckzungen 44 (Zweier-, Dreier-und Viewergruppen 4.1 bis 4.4) tragende Verteilerstreifen 66 durch Drahtbrücken 73 oder Blechbrücken 74 miteinander verbunden, die mit Durchgangslöchern auf die Brückenansätze 67 aufgesteckt sind. Wie aus Fig. 4 zu entnehmen ist, sind die Verteilerstreifen 66 für die Gruppen 4.1 bis 4.4 von unterschiedlicher Länge als geschwärzte Streifen erkennbar. Dabei können in einer Reihe A1 bis N1 zwei oder mehrere Gruppen hintereinander angeordnet sein.

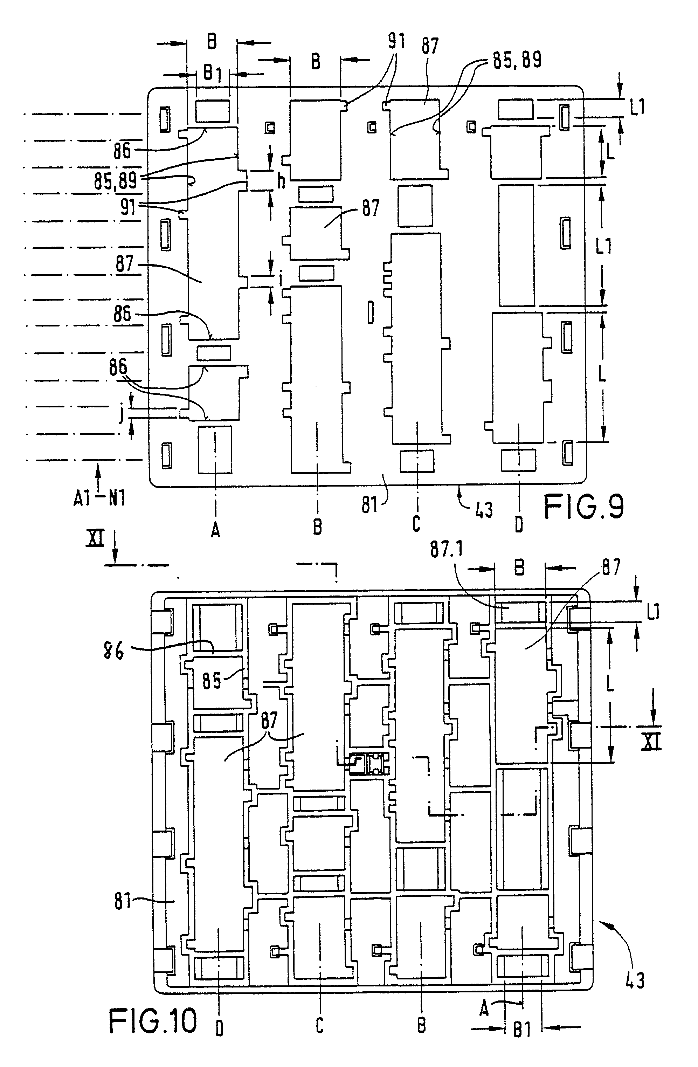

Der Führungsrahmen 43 besteht aus einer horizontalen Basiswand 81 (Fig. 11), von der unterseitig an den beiden sich quer zu den Reihen A1 bis N1 erstreckenden Seitenrändern mehrere, z. B. vier auf jeder Seitenlänge verteilt angeordnete Verrastungsarme 82 nach unten vorspringen, die an ihren freien Enden dem jeweils anderen Seitenrand zugewandte Verrastungsnasen 83 mit Anlaufschrägen 84 aufweisen. Außerdem springen von der Unterseite der Basiswand 81 Stecköffnungswände 85, 86 nach unten vor, die die Stecköffnungen 87 seitlich begrenzen, wobei sich die Stecköffnungen 87 als Durchgangslöcher gleicher Form in der Basiswand 81 fortsetzen. Bei der vorliegenden Ausgestaltung ist die sich quer zu den Steckzeilen A bis D erstreckende Stecköffnungsbreite B aller Stecköffnungen 87 gleich groß bemessen, jedoch ist die sich längs den Steckzeilen A bis D erstreckende Stecköffnungslänge L unterschiedlich bemessen und für bestimmte Steckgruppen der Steckzungen 4 vorgesehen, so daß sich nicht nur quer zu den Reihen A1 bis N1 erstreckende Steg- bzw. Stecköffnungswände 85, sondern auch parallel zu den Reihen A1 bis N1 erstreckende Steg- bzw. Stecköffnungswände 86 ergeben. Je nach Regelmäßigkeit oder Unregelmäßigkeit der Stecköffnungslänge L sind die Stecköffnungswände 85, 86 somit in Gitterform angeordnet. Zwischen den jeweils äußeren Stecköffnungswänden 85 und den Verrastungsarmen 82 ist ein Abstand g (Fig. 11) vorgesehen. Im Unterschied zum Ausführungsbeispiel nach Fig. 1 sind hier keine Positionierrippen in den Wandflächen 89 der Stecköffnungen 87 vorgesehen. Dagegen weisen die Stecköffnungen 87 vorzugsweise Codiernuten 91 in ihren einander gegenüberliegenden Wandflächen 89 auf, und zwar hier in den sich quer zu den Reihen A1 bis N1 erstreckenden Steckföfnungswänden 85. Die Stecköffnungswände 85, 86 sind im wesentlichen gleich dick bemessen, so daß sich im Bereich der Codiernuten 91 U-förmige Wandteile ergeben. Wie aus der Fig. 9 und 10 deutlich zu entnehmen ist, sind bei dieser Ausgestaltung Codiernuten unterschiedlicher Breite h, i, j vorgesehen, wodurch die Anzahl der unverwechselbaren Codiermöglichkeiten vergrößerbar ist.

Zur Aufnahme der Verrastungsarme 82 sind im Gehäuse 42 (Fig. 5) seitlich offene Nuten 92 oder Schächte 93 zwischen den Umfangswänden 52, 52.1 vorgesehen, die sich bis in den Bereich der Mittelwand 55 erstrecken, wobei die Verrastungsarme 82 Löcher 94 in der Mittelwand 55 durchfassen und dabei die Mittelwand 55 oder Umfangswand 54 mit ihren Verrastungsnasen 83 hintergreifen, oder die Umfangswand 54.1 untergreifen, wodurch die Halterung des Führungsrahmens 43 gewährleistet ist. Zur Zentrierung des Führungsrahmens 43 am Gehäuse 42 dient hier ein einziger Zentrierstift 96 mit im wesentlichen viereckigem Querschnitt, der in ein Zentrierloch 96.1 (Fig. 5) entsprechenden Querschnitts in der Mittelwand 55 einfaßt.

Wie aus Fig. 2 zu entnehmen ist, enden die in die Ausnehmung 50 hineinragende Steckzungen 44 etwas unterhalb der Oberseite 97 des Führungsrahmens 43, die vorzugsweise mit der Oberkante des Gehäuses 42 in einer Ebene liegt. Die Höhe k der Stecköffnungswände 85, 86 ist dabei so bemessen, daß sie in einem Abstand von den Fußansätzen 68 der Flachsteckstifte 44 enden.

Bei der vorliegenden Ausgestaltung sind seitlich neben den äußeren oder zwischen einigen Stecköffnungen 87 ebenfalls in den Steckzeilen A bis D angeordnete Stecköffnungen 87.1 (Fig. 3) vorgesehen, deren Breite B.1 kleiner bemessen ist als die Breite B der Stecköffnungen 87, und die keine Codiernuten 91 aufweisen, jedoch auch mit solchen versehen sein können. Diesen schmaleren Stecköffnungen 87.1 mit ebenfalls verschiedenen Längen L1 können jeweils ein oder mehrere Flachsteckstifte angeordnet sein.

Im Rahmen der Erfindung ist es auch möglich, die Verrastungsarme oder -nasen 5, 82, 83 durch horizontale, langgestreckte Stege, die durch mehrere, z.B. drei Verrastungsarme verbunden sind, oder an sich im wesentlichen rechtwinklig zum Führungsrahmen erstreckenden Wandteilen auszubilden.

Das Gehäuse 2 und der Führungsrahmen 3 bestehen jeweils einstükkig aus Kunststoff, und sie werden vorzugsweise durch Spritzgießen hergestellt.

Die Verteilervorrichtung 1 kann im zugehörigen Gerät durch eine Schnapp-, Rast- oder Schraubverbindung befestigt werden. Ferner ist es zweckmäßig, die Verteilervorrichtung 1 mit einer gut zugänglichen Steckeinrichtung für einen sogenannten Diagnose-Stecker auszurüsten.

## Ansprüche

1. Elektrische Verteilervorrichtung zum Einbau in insbesondere elektrische Haushaltsgeräte, wie Geschirrspüler, Waschmaschinen, Trockner und dgl., mit einem Kunststoffsockel als Träger für mit Steckfahnen ausgerüstete Kontaktelemente und einem Gruppenstecköffnungen bildenden Führungsgitter zum Aufnehmen von auf die Steckfahnen steckbare Gruppenstecker
**gekennzeichnet durch folgende Merkmale:**

a) es sind eine Mehrzahl, insbesondere flache Steckfahnen (4; 44) in Abständen voneinander an einer Längsseite eines Verbinderstreifens (66) angeordnet,

b) der Kunststoffsockel (2; 42) weist in mehreren, sich parallel zueinander erstreckenden Reihen (A1 bis Q1) Halteelemente (61) für die Verbinderstreifen (66) auf,

c) das Führungsgitter ist als ein lösbar mit dem Kunststoffsockel (2;42) verbindbarer Führungsrahmen (3; 43) ausgebildet.

2. Verteilervorrichtung nach Anspruch 1,
**dadurch gekennzeichnet,**
daß die Steckfahnen (4; 44) und vorzugsweise auch die Gruppenstecköffnungen (23; 87) in Steckzeilen (A bis E) angeordnet sind, die sich rechtwinklig zu den Reihen (A1 bis Q1) erstrecken.

3. Verteilervorrichtung nach Anspruch 1 oder 2,
**dadurch gekennzeichnet,**
daß die Gruppenstecköffnungen (23; 87) durch in der Einsteckrichtung von einer Bodenwand (55) des Kunststoffsockels (2; 42) begrenzte Steckkammern gebildet sind.

4. Verteilervorrichtung nach Anspruch 3,
**dadurch gekennzeichnet,**
daß die Bodenwand (55) zwischen zwei einander gegenüberliegenden Flachseiten des Kunststoffsockels (2; 42) und der Führungsrahmen (3; 43) an der einen, vorzugsweise der oberen Flachseite, angeordnet sind.

5. Verteilervorrichtung nach Anspruch 3 oder 4,
**dadurch gekennzeichnet,**
daß die Steckfahnen (4; 44) von der dem Führungsrahmen (3; 43) abgewandten Seite her in Durchstecköffnungen (62) der Bodenwand (55) des Kunststoffsockels (2; 42) eingesteckt sind und die Bodenwand (55) überragen.

6. Verteilervorrichtung nach einem oder mehreren der Ansprüche 3 bis 5,
**dadurch gekennzeichnet,**
daß an der Bodenwand (55) oder im Kunststoffsockel (2; 42) in den Reihen (A1 bis Q1) angeordnete Steckrippen oder Steckleisten (59) zur Lagerung der Steckfahnen (4; 44) und/oder der Verbinderstreifen (66) vorgesehen sind.

7. Verteilervorrichtung nach einem oder mehreren der Ansprüche 1 bis 6,
**dadurch gekennzeichnet,**
daß die Halteelemente durch Nuten (61) auf der dem Führungsrahmen (3; 43) abgewandten Seite der Bodenwand (55) oder der Steckleisten (59) gebildet sind.

8. Verteilervorrichtung nach Anspruch 7,
**dadurch gekennzeichnet,**
daß die Nuten (61) längs den Reihen (A1 bis Q1) durchgehend verlaufen.

9. Verteilervorrichtung nach einem oder mehreren der Ansprüche 6 bis 8,
**dadurch gekennzeichnet,**
daß die Steckleisten (59) fester Bestandteil des Kunststoffsockels (2; 42) und vorzugsweise einstükkig am Gehäuse (2; 42) oder an der Bodenwand (55) angeformt sind.

10. Verteilervorrichtung nach einem oder mehreren der Ansprüche 6 bis 9,
**dadurch gekennzeichnet,**
daß die Steckleisten (59) durch Stege miteinander verbunden sind.

11. Verteilervorrichtung nach einem oder mehreren der Ansprüche 1 bis 10,
**dadurch gekennzeichnet,**
daß Verbinderstreifen (66) unterschiedlicher Länge vorgesehen sind und/oder mit einer unterschiedlichen Anzahl von Steckfahnen (4; 44) versehen sind.

12. Verteilervorrichtung nach einem oder mehreren der Ansprüche 1 bis 11,
**dadurch gekennzeichnet,**
daß bestimmte Verbinderstreifen (66) auf der dem Führungs rahmen (3; 43) abgewandten Flachseite durch in einem Brückenraum (58) angeordnete Schaltbrücken (73, 74) miteinander verbunden sind.

13. Verteilervorrichtung nach einem oder mehreren der Ansprüche 1 bis 12,
**dadurch gekennzeichnet,**
daß die Verbinderstreifen (66) auf ihren den Steckfahnen (4; 44) abgewandten Längs seiten wenigstens einen, vorzugsweise jeder Steckfahne (4; 44) gegenüberliegend, einen Schaltbrük kenanschlußansatz, vorzugsweise in Form einer Zunge (67), aufweisen.

14. Verteilervorrichtung nach einem oder mehreren der vorhergehenden Ansprüche,
**dadurch gekennzeichnet,**

daß den Gruppenstecköffnungen (23; 87) und den Gruppenstekkern Formteile als Codiervorrichtungen (35,91) zugeordnet sind.

15. Verteilervorrichtung nach Anspruch 13,
**dadurch gekennzeichnet,**
daß die Formteile durch Codiernuten (35,91) oder -stege in oder auf den Wandungen der Gruppenstecköffnungen (23; 87) gebildet sind, die mit an den Gruppensteckern angeordneten Codierstegen oder -nuten zusammenwirken.

16. Verteilervorrichtung nach einem oder mehreren der Ansprüche 3 bis 15,
**dadurch gekennzeichnet,**
daß der Führungsrahmen (3; 43) zu seiner Rahmenebene rechtwinklig angeordnete Führungswände (17; 85, 86) aufweist, die die Steckkammern für die Gruppenstecker begrenzen.

17. Verteilervorrichtung nach Anspruch 16,
**dadurch gekennzeichnet**
daß die Führungswände (17; 85, 86) von einer Basisplatte (81) ausgehen.

18. Verteilervorrichtung nach einem oder mehreren der vorhergehenden Ansprüche,
**dadurch gekennzeichnet,**
daß der Führungsrahmen (3) an der die Steckfahnen (4; 44) enthaltenden Flachseite des Kunststoffsockels (2) angesetzt oder vorzugsweise aufgesetzt ist.

19. Verteilervorrichtung nach einem oder mehreren der vorhergehenden Ansprüche,
**dadurch gekennzeichnet,**
daß der Führungsrahmen (3; 43) durch sich im wesentlichen quer zu seiner Rahmenebene erstreckende Verrastungsarme (5; 82) mit Verrastungskanten hintergreifenden Verrastungsnasen (6;83) lösbar am Kunststoffsockel (2; 42) verrastbar ist.

20. Verteilervorrichtung nach Anspruch 19,
**dadurch gekennzeichnet,**
daß die Verrastungsarme (5) an einander gegenüberliegenden Seitenflächen des Kunststoffsockels (2) angeordnet sind.

21. Verteilervorrichtung nach Anspruch 20,
**dadurch gekennzeichnet,**
daß die Verrastungsarme (82) in Schächte (93) oder Ausnehmungen des Kunststoffsockels (42) greifen.

22. Verteilervorrichtung nach einem oder mehreren der vorhergehenden Ansprüche,
**dadurch gekennzeichnet,**
daß die Steckfahnen (4) von der sie enthaltenden Flachseite des Kunststoffsockels (2) vorragen.

23. Verteilervorrichtung nach einem oder mehreren der vorhergehenden Ansprüche,
**dadurch gekennzeichnet,**
daß die Steckfahnen (44) innerhalb einer Ausnehmung (50) an der die Steckfahnen (44) enthaltenden Seite des Kunststoffsockels (42) angeordnete sind.

24. Verteilervorrichtung nach einem oder mehreren der vorhergehenden Ansprüche,

**dadurch gekennzeichnet,**

daß der Führungsrahmen (43) wenigstens teilweise in einer Ausnehmung (50) des Kunststof fsockels (42) angeordnet ist. Ausnehmung (50) des Kunststoffsockels (42) angeordnet ist.

25. Verteilervorrichtung nach einem oder mehreren der Ansprüche 5 bis 24,

**dadurch gekennzeichnet,**

daß die Steckfahnen (44) die Durchstecköffnungen (62) mit Fußansätzen (68) durchfassen, die die Bodenwand (55) überragen, und deren freie Enden vorzugsweise durch Einkerbungen ausgebogen sind.

26. Verteilervorrichtung nach einem oder mehreren der vorhergehenden Ansprüche,

**dadurch gekennzeichnet,**

daß der Führungsrahmen (3;43) ein einteilig hergestelltes Kunststoff-Formteil ist.

27. Verteilervorrichtung nach einem oder mehreren der vorhergehenden Ansprüche,

**dadurch gekennzeichnet,**

daß die Steckfahnen (4; 44) mit den zugehörigen Verbindungsansätzen (67), Fußansätzen (68) und Verbinderstreifen (66) einteilige Stanzteile vorzugsweise aus Blech sind.

28. Verteilervorrichtung nach einem oder mehreren der vorhergehenden Ansprüche,

**dadurch gekennzeichnet,**

daß vom Führungsrahmen (3) oder vom Kunststoffsockel (2) wenigstens ein, vorzugsweise mehrere Positionierstifte (11) vorspringen, die jeweils in ein Positionierloch (12) am jeweils anderen Teil einfassen.

29. Verteilervorrichtung nach einem oder mehreren der vorhergehenden Ansprüche,

**dadurch gekennzeichnet,**

daß an wenigstens einer Wand (17) der Stecköffnungen (23), vorzugsweise an den sich längs der zugehörigen Steckzeile (A bis E) erstreckenden Wand, Positionierrippen (31) gleicher Abmessungen und Abstände voneinander vorgesehen sind, die sich achsparallel zu den Stecköffnungen (23) erstrecken.

30. Verteilervorrichtung nach einem oder mehreren der vorhergehenden Ansprüche,

**dadurch gekennzeichnet,**

daß die Verteilervorrichtung (1) im sie aufnehmenden Gerät durch eine Schnapp-, Rast- oder Schraubverbindung befestigbar ist.

FIG.1

8

FIG.2

FIG.3

FIG.4

## FIG.5

## FIG.6

FIG.7

FIG.8

FIG.11

FIG.9

FIG.10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | DE-A-3340742 (SIEMENS AG) <br> * Seite 6, Zeile 4 - Seite 7, Zeile 20; Figuren 1-8 * | 1 | H02B1/056 |
| A | US-A-3377444 (R.DOUBT) <br> * Spalte 3, Zeilen 33 - 56; Figuren 4, 5, 6 * | 1 | |
| A | FR-A-1344202 (LA TELEMECANIQUE ELECTRIQUE) <br> * Seite 2, rechte Spalte, letzter Absatz - Seite 4, linke Spalte, Absatz 3; Figuren 1, 9, 11, 13, 15 * | 1 | |

RECHERCHIERTE SACHGEBIETE (Int. Cl.5 )

H02B
H02G
H01R

Der vorliegende Recherchenbericht wurde für alle Patentansprüche erstellt

| Recherchenort | Abschlußdatum der Recherche | Prüfer |
|---|---|---|
| DEN HAAG | 17 OKTOBER 1990 | WOODALL C.G. |